# EUROPÄISCHE PATENTSCHRIFT

(11) **EP 3 708 843 B1**
(45) Veröffentlichungstag und Bekanntmachung des Hinweises auf die Patenterteilung: **27.07.2022**
(21) Anmeldenummer: 20187955.8
(22) Anmeldetag: 27.07.2020
(51) Int. Cl.: F04D 19/04, F04D 25/06, H02K 15/03, F04D 29/66, H02K 15/16

(54) **VERFAHREN ZUR HERSTELLUNG EINES ELEKTROMOTORS ODER EINES VAKUUMGERÄTS MIT EINEM SOLCHEN**
METHOD FOR THE MANUFACTURE OF AN ELECTRIC MOTOR OR A VACUUM APPARATUS WITH SUCH A MOTOR
PROCÉDÉ DE FABRICATION D'UN MOTEUR ÉLECTRIQUE OU D'UN APPAREIL A VIDE AVEC UN TEL MOTEUR

(43) Veröffentlichungstag der Anmeldung: 16.09.2020
(73) Patentinhaber: Pfeiffer Vacuum Technology AG, 35614 Asslar (DE)
(72) Erfinder: Koch, Bernhard, 35799 Barig-Selbenhausen (DE); Wolff, Nikolai, 35764 Sinn-Fleisbach (DE); Tatzber, Bernhard, 35305 Grünberg (DE)
(74) Vertreter: Manitz Finsterwald Patent- und Rechtsanwaltspartnerschaft mbB

(56) Entgegenhaltungen:
- EP-A2- 2 916 009
- DE-A1- 19 619 997
- DE-A1-102012 216 450
- DE-B3-102015 113 681

## Beschreibung

Die vorliegende Erfindung betrifft ein Verfahren zur Herstellung eines Elektromotors oder eines Vakuumgeräts, insbesondere einer Turbomolekularpumpe, mit einem solchen, wobei der Elektromotor eine Elektromagnetanordnung und eine Permanentmagnetanordnung umfasst, wobei die Elektromagnetanordnung an einem Stator des Elektromotors und die Permanentmagnetanordnung an einem Rotor des Elektromotors angeordnet ist, und/oder umgekehrt.

Bei vielen technischen Anwendungen von Elektromotoren, insbesondere in der Vakuumtechnik, sind möglichst geringe Schwingungen und Vibrationen der Gerätschaften und deren Umgebung anzustreben. Dies gilt z.B. besonders für ein Elektronenmikroskop. Die für den Betrieb erforderlichen Baugruppen und Komponenten sollten hinsichtlich Vibrationsarmut optimiert werden, um eine möglichst gute Performance der Anwendung erreichen zu können.

Sind Produkte mit drehenden Rotoren, wie etwa Pumpen und/oder Vakuumpumpen, im Rahmen der Anwendung montiert, so gilt es, diese möglichst vibrationsarm zu gestalten. Zu diesem Zweck sind verschiedene Maßnahmen bekannt. So kann etwa ein Rotor des Elektromotors, der z.B. Teil eines Pumpenrotors sein kann, ausgewuchtet werden. Ein weiterer Ansatz besteht darin, den Rotor weich zu lagern, d. h. ein Lager für den Rotor ist elastisch aufgehängt. Dies erfolgt typischerweise durch sogenannte Schwingringe.

Die EP 2 916 009 A2 offenbart ein Verfahren zum Auswuchten oder Zentrieren eines Rotors eines Elektromotors einer Vakuumpumpe, insbesondere einer Turbomolekularpumpe, wobei der Rotor wenigstens einen Permanentmagneten aufweist und gegenüber einem Stator des Elektromotors drehbar gelagert ist, und wobei die Form und/oder die materialspezifischen Eigenschaften des Permanentmagneten derart verändert werden, dass eine Unwucht und/oder eine Exzentrizität des Rotors verringert, insbesondere minimiert, wird.

Weiteren Stand der Technik bilden die DE 196 19 997 A1 und die DE 10 2015 113 681 B3.

Es ist eine Aufgabe der Erfindung, Vibrationen im Betrieb eines Elektromotors bzw. eines Vakuumgeräts nach eingangs genannter Art zu reduzieren.

Diese Aufgabe wird durch ein Verfahren gemäß Anspruch 1 gelöst.

Typischerweise weist die Permanentmagnetanordnung insbesondere ein permanentes Magnetfeld auf, welches sich, insbesondere über den Umfang des Rotors, im Wesentlichen symmetrisch in Bezug auf eine Rotationsachse des Rotors erstreckt, "im Wesentlichen" deshalb, weil die Symmetrie in der Praxis nie perfekt ist, sondern stets mit gewissen Abweichungen behaftet ist.

Das erfindungsgemäße Verfahren umfasst die Schritte: Bereitstellen wenigstens eines Permanentmagneten für die Permanentmagnetanordnung; Erfassen des permanenten Magnetfeldes des wenigstens einen Permanentmagneten; anschließend Optimieren des permanenten Magnetfelds der Permanentmagnetanordnung derart, dass eine Abweichung in der Symmetrie und/oder eine magnetische Radialkraft zwischen Rotor und Stator möglichst gering ist.

In Elektromotoren tritt eine "Unbalanced Magnetic Pull" oder kurz "UMP" genannte Radialkraft auf, wenn die magnetische Feldverteilung im Luftspalt des Motors nicht homogen ist. Dies kann insbesondere einerseits bei einer radialen Verschiebung des Rotors in Relation zum Stator oder andererseits durch eine Abweichung in der Symmetrie des permanenten Magnetfeldes in Bezug auf die Rotationsachse auftreten. Die Ausprägung der Kraft kann sich je nach Ursache unterscheiden. Die Erfindung setzt insbesondere an der Abweichung in der Symmetrie des permanenten Magnetfeldes an und sorgt dafür, dass diese möglichst gering ist. Entsprechend verringert sich der UMP bzw. die Radialkraft auf den Rotor. Es gilt also, die Radialkräfte zwischen dem Rotor, insbesondere der Permanentmagnetanordnung, und dem Stator, insbesondere der Elektromagnetanordnung, zu minimieren. Denn diese erzeugen Vibrationen im Betrieb.

Neben geometrischen Toleranzen der Permanentmagnetanordnung, die üblicherweise auf einer Rotorwelle montiert ist, weist diese auch magnetische Toleranzen auf, d.h. das Magnetfeld weicht von der theoretisch optimalen Form und Stärke, also einer Sollform, ab. Selbst wenn ein solcher "nicht idealer" Magnet zentrisch in Bezug auf die gewünschte Rotationsachse und in Bezug auf eine Kernanordnung der Elektromagnetanordnung mit deren magnetischen Werkstoffen, wie etwa Eisen, angeordnet ist, wird durch Abweichungen im Magnetfeld der Permanentanordnung eine Kraft zwischen diesen Komponenten auftreten. Diese Kraft führt im Betrieb des Geräts zu Vibrationen. Diese Vibration tritt also auch dann auf, wenn die Elektromagnetanordnung nicht bestromt ist, da die Magnetkräfte des permanenten Magnetfelds der Permanentmagnetanordnung unmittelbar gegenüber der Kernanordnung wirken. Die Erfindung erweist sich also insbesondere dann als vorteilhaft, wenn die Kernanordnung eisenhaltig ist. Zudem kommen aber auch weitere Unregelmäßigkeiten bei Aktivität der Elektromagnetanordnung in Betracht. Eine Inhomogenität des Magnetfelds im Spalt zwischen Rotor und Stator im Betrieb des Elektromotors kann also auch bei einer theoretischen perfekten geometrischen Anordnung der Komponenten auftreten, d. h. bei perfekter Form und Anordnung des Rotors und des wenigstens einen Permanentmagneten.

Handelt es sich bei der Permanentmagnetanordnung z.B. um einen zweipoligen Magneten, so wird die Vibration mit doppelter Frequenz der Laufdrehzahl erscheinen. Im Speziellen wurde beobachtet, dass besonders laufruhige Turbopumpen bei doppelter Drehfrequenz eine höhere Vibration verursachen, als bei der Lauffrequenz selbst. Zumindest anteilig ist dies auf magnetische Kräfte des Elektromotors aufgrund von Magnetfeldabweichungen von der Sollform zurückzuführen.

Der Begriff Symmetrie kann sich beispielsweise auf einen, insbesondere ersten, Axialabschnitt beziehen oder auch auf mehrere Axialabschnitte oder eine Gesamtaxiallänge der Permanentmagnetanordnung. Der Begriff Symmetrie bezieht sich grundsätzlich darauf, dass im - theoretischen - Fall einer perfekten Symmetrie ein resultierender Radialkraftvektor Null ist. Diesen theoretischen Fall gilt es im Rahmen der Optimierung anzunähern, insbesondere durch gezieltes "Design" des Magnetfeldes ausgehend von in der Praxis nicht zu vermeidenden Unvollkommenheiten der eingesetzten Permanentmagneten. Im einfachsten Fall wird dabei die gleiche Feldstärke und/oder Flussdichte an zwei um 180° gegenüberliegenden Seiten gleich eingestellt. Vorteilhafterweise kann aber die Gesamtform des Magnetfeldes in Bezug auf wenigstens eine Axialebene berücksichtigt werden. Dabei kann dann beispielsweise auch eine lokale Abweichung von einer Sollform bzw. Symmetrie dadurch ausgeglichen werden, dass an zwei oder mehr Stellen das Magnetfeld lokale Abweichungen von der Sollform aufweist, welche die erste lokale Abweichung gemeinsam ausgleichen. Das Ziel ist also die Reduzierung des resultierenden Radialkraftvektors in Richtung Null.

Grundsätzlich erfolgt die Optimierung des permanenten Magnetfelds der Permanentmagnetanordnung bei der Herstellung des Elektromotors bzw. der Vakuumpumpe, insbesondere in Bezug auf einen bestimmten Rotor und/oder Stator, einen bestimmten herzustellenden Elektromotor und/oder ein bestimmtes herzustellendes Vakuumgerät.

Das Optimieren umfasst ferner grundsätzlich gezielte Maßnahmen im Hinblick auf zunächst vorhandene Abweichungen des permanenten Magnetfeldes von dem wenigstens einen Permanentmagneten und/oder der Permanentmagnetanordnung von seiner Sollform, welche typischerweise symmetrisch ist. Insbesondere werden Abweichungen in der Symmetrie ausgeglichen und/oder verringert.

So kann es insbesondere vorgesehen sein, dass eine lokale Abweichung von einer Sollform und/oder der Symmetrie des permanenten Magnetfeldes des wenigstens einen Permanentmagneten und/oder der Permanentmagnetanordnung verringert und/oder ausgeglichen wird. Der Begriff "verringern" bezieht sich hier darauf, dass das permanente Magnetfeld lokal so angepasst wird, dass die lokale Abweichung als solche klein ist. Der Begriff "ausgleichen" bezieht sich hingegen darauf, dass eine ähnliche lokale Abweichung von einer Sollform zumindest im Wesentlichen gegenüber von der lokalen Abweichung vorgesehen oder erzeugt wird, sodass sich die lokalen Abweichungen in Bezug auf die Rotationsachse gegenseitig möglichst weitgehend im Hinblick auf die resultierenden Radialkräfte nivellieren. Dann ist zwar die Form des Magnetfeldes nicht so wie "eigentlich" vorgesehen, entspricht also nicht seiner Sollform. Gleichwohl kann hierdurch eine Symmetrie verbessert werden, was die Radialkräfte besonders reduziert.

Allgemein kann es vorgesehen sein, dass das permanente Magnetfeld der Permanentmagnetanordnung derart optimiert wird, dass eine Inhomogenität des Magnetfelds im Spalt zwischen Rotor und Stator im Betrieb des Elektromotors reduziert wird. Dies wird - z.B. zum Zweck einer Teilanmeldung - hiermit ausdrücklich auch als ein unabhängiger, vorteilhafter Gegenstand offenbart. Offenbart ist also allgemein ein Verfahren zur Herstellung eines Elektromotors oder eines Vakuumgeräts, insbesondere einer Turbomolekularpumpe, mit einem Elektromotor, wobei der Elektromotor eine Elektromagnetanordnung und eine Permanentmagnetanordnung umfasst, wobei die Elektromagnetanordnung an einem Stator des Elektromotors und die Permanentmagnetanordnung an einem Rotor des Elektromotors angeordnet ist, und/oder umgekehrt; wobei die Permanentmagnetanordnung ein permanentes Magnetfeld aufweist; wobei das Verfahren die Schritte umfasst: Bereitstellen wenigstens eines Permanentmagneten für die Permanentmagnetanordnung; Erfassen des permanenten Magnetfeldes des wenigstens einen Permanentmagneten; Optimieren des permanenten Magnetfeldes derart, dass eine Inhomogenität des Magnetfelds im Spalt zwischen Rotor und Stator im Betrieb des Elektromotors möglichst gering ist und/oder reduziert wird.

Die Optimierung erfolgt grundsätzlich auf der Basis des erfassten Magnetfeldes sowie von im Rahmen der Erfassung festgestellten Abweichungen des Magnetfeldes von einer Sollform und/oder einer Symmetrie. Bei der Erfassung kann beispielsweise das permanente Magnetfeld der Permanentmagnetanordnung als Ganzes oder das permanente Magnetfeld des wenigstens einen Permanentmagneten, d. h. bei mehreren Permanentmagneten auch individuell für die jeweiligen Permanentmagneten, erfolgen.

Die Permanentmagnetanordnung kann beispielsweise wenigstens zwei in Bezug auf eine Rotationsachse des Rotors zumindest im Wesentlichen gegenüberliegende magnetische Pole aufweisen. Bei einer Ausführungsform ist vorgesehen, dass das permanente Magnetfeld dahingehend optimiert wird, dass die Pole in ihrer Feldstärke und/oder Flussdichte möglichst ähnlich sind. Dies erfolgt bevorzugt in Bezug auf einen bestimmten Abstand zur Oberfläche des wenigstens einen Permanentmagneten und/oder der Permanentmagnetanordnung, d.h. die Feldstärke und/oder Flussdichte wird in einem definierten Abstand ermittelt. Gelingt es, das Magnetfeld der Permanentmagnetanordnung so zu optimieren, dass die jeweils gegenüberliegenden Magnetpole im Wesentlichen identisch in ihrer Flussdichte und/oder Feldstärke sind, so sind die Radialkräfte in Bezug auf eine Verbindungslinie zwischen den Polen besonders gering, was zu einem verbesserten Vibrationsverhalten führt. Bei den zwei gegenüberliegenden Polen handelt es sich nicht notwendigerweise aber bevorzugt um gegensätzliche Pole, also um einen magnetischen Nordpol und einen magnetischen Südpol.

Gemäß einer Weiterbildung ist vorgesehen, dass das permanente Magnetfeld zwecks Optimierung verändert wird. Somit lässt sich das Magnetfeld auf einfache Weise optimieren. Die Veränderung erfolgt insbesondere dauerhaft und/oder lokal. Die Veränderung erfolgt insbesondere durch Manipulation des Magnetmaterials, insbesondere hinsichtlich seiner magnetischen Eigenschaften.

Das permanente Magnetfeld kann beispielsweise durch, insbesondere lokales, Abschwächen und/oder Verstärken des permanenten Magnetfeldes des wenigstens einen Permanentmagneten optimiert werden.

Beispielsweise kann das permanente Magnetfeld des wenigstens einen Permanentmagneten durch mechanische Bearbeitung des wenigstens einen Permanentmagneten verändert werden. So kann das Magnetfeld zum Beispiel lokal abgeschwächt werden, indem Material vom Permanentmagneten abgetragen wird, dies zum Beispiel spanend. Auch ist es möglich, dass das permanente Magnetfeld durch mechanische Stöße abgeschwächt wird.

Bei einem weiteren Beispiel ist vorgesehen, dass das permanente Magnetfeld des wenigstens einen Permanentmagneten durch thermische Beeinflussung verändert wird. Hierdurch wird auf einfache Weise ausgenutzt, dass sich permanente Magnetfelder durch thermische Beeinflussung abschwächen lassen.

Gemäß einer vorteilhaften Ausführungsform wird das permanente Magnetfeld durch einen Laser verändert, also durch Beaufschlagen des Permanentmagneten mit Laserstrahlung. Dies erlaubt eine besonders präzise Veränderung des permanenten Magnetfelds. Ferner erweist sich ein Laser beim Aufbau einer Vorrichtung zur Durchführung des erfindungsgemäßen Verfahrens als besonders vorteilhaft, weil dieser den Permanentmagneten nicht zu berühren braucht, sondern insbesondere auch relativ weit von diesem entfernt angeordnet werden kann und trotzdem besonders präzise wirken kann. Der Laser kann die Veränderung des Magnetfelds insbesondere auf zwei Weisen bewirken. So kann erstens mittels des Lasers eine lokale thermische Beeinflussung des Materials des Permanentmagneten erreicht werden, die zu einer entsprechend lokalen Abschwächung des permanenten Magnetfelds führt. Zweitens kann mittels des Lasers auch Material vom Permanentmagneten abgetragen werden, was das äußere Magnetfeld ebenfalls lokal schwächt. Dies wird auch als Laserablation bezeichnet. Beide Wirkungsweisen können auch kombiniert werden.

Für ein lokales Verstärken des Magnetfelds kann das Feld des Magneten beispielsweise durch kurzzeitiges Anlegen eines sehr starken und punktuellen Feldes erreicht werden. Solange der Magnet noch nicht auf der Welle montiert ist, kann dafür an entsprechender Stelle eine Vorrichtung installiert werden, die es ermöglicht, den Magneten lokal stärker aufzumagnetisieren. Wenn der Magnet hingegen schon auf der Welle montiert ist, kann z.B. die Rotorwelle selbst (wenn sie aus magnetischem Stahl ist) als einen Pol diese Vorrichtung nutzen und nur am Außendurchmesser einen "Gegenpol" installieren, der das lokale Magnetisieren ermöglicht.

Vorstehend wurden unter anderem Ausführungsformen erläutert, bei denen das Optimieren umfasst, dass ein bestehendes permanentes Magnetfeld des wenigstens einen Permanentmagneten während der Herstellung des Elektromotors bzw. des Vakuumgeräts gezielt verändert wird. Alternativ oder zusätzlich hierzu kann das permanente Magnetfeld der Permanentmagnetanordnung auch optimiert werden bzw. eine Abweichung in der Symmetrie reduziert werden, indem wenigstens zwei Permanentmagneten für die Permanentanordnung aus einer Mehrzahl an Permanentmagneten unter Berücksichtigung von Abweichungen ihres permanenten Magnetfeldes von einer Sollform ausgewählt und/oder angeordnet werden, insbesondere wobei Permanentmagneten mit Abweichungen ihres Magnetfeldes von einer Sollform gezielt so ausgewählt und angeordnet werden, dass sich die Abweichungen gegenseitig ausgleichen.

Bei einer Ausführungsform ist vorgesehen, dass die Permanentmagnetanordnung wenigstens zwei Permanentmagneten aufweist, wobei das Verfahren die Schritte umfasst: Bereitstellen einer Mehrzahl an Permanentmagneten zur Auswahl von wenigstens zwei Permanentmagneten für die Permanentmagnetanordnung; Erfassen des permanenten Magnetfeldes aller Permanentmagneten der Mehrzahl an Permanentmagneten; Auswählen von Permanentmagneten aus der Mehrzahl an Permanentmagneten zur Bildung der Permanentmagnetanordnung, wobei die Permanentmagneten zwecks Optimierung des permanenten Magnetfelds der Permanentmagnetanordnung derart ausgewählt werden, dass eine Abweichung in der Symmetrie möglichst gering ist.

Mit besonderem Vorteil kann es vorgesehen sein, dass ein erster Permanentmagnet ausgewählt wird, für den eine Abweichung seines permanenten Magnetfeldes von einer Sollform erfasst wurde, und wobei wenigstens ein zweiter Permanentmagnet ausgewählt wird, für den ebenfalls eine Abweichung seines permanenten Magnetfelds von einer Sollform erfasst wurde, wobei der erste Permanentmagnet und wenigstens der zweite Permanentmagnet derart ausgewählt und/oder angeordnet werden, dass sich die Abweichungen in Bezug auf die Rotationsachse des Rotors möglichst weitgehend ausgleichen. Somit ist keine Veränderung des Magnetfelds nötig und entsprechende Einrichtungen zur Durchführung derselben können entfallen.

Grundsätzlich kann das permanente Magnetfeld der Permanentmagnetanordnung und/oder eine Symmetrieabweichung beispielsweise in wenigstens einem, insbesondere ersten Axialabschnitt und/oder wenigstens einer Axialebene erfasst werden. Beispielsweise kann das permanente Magnetfeld der Permanentmagnetanordnung derart optimiert werden, dass eine Abweichung in der Symmetrie für wenigstens einen, insbesondere ersten, Axialabschnitt reduziert wird. Insbesondere bezieht sich die Symmetrie auf diesen Axialabschnitt. Das Erfassen des permanenten Magnetfelds kann grundsätzlich z.B. ein Messen an mehreren Messpunkten in wenigstens einem Axialabschnitt, bevorzugt in wenigstens einer Axialebene, umfassen.

Grundsätzlich bezieht sich der Begriff "Axialabschnitt" auf eine Achse, die der Rotationsachse des Rotors im Betrieb entspricht. Als eine "Axialebene" wird eine Ebene betrachtet, die senkrecht zur Rotationsachse ist, wobei eine Ebene keine Dicke bzw. axiale Länge aufweist. Wenn bei der Erfassung des Magnetfelds der Rotor bzw. die Permanentmagnetanordnung relativ zu einem Sensor um die Rotationsachse gedreht wird, liegen mehrere dabei aufgenommene Messpunkte in einer Axialebene. Der Begriff "Axialabschnitt" meint hingegen den Bereich zwischen zwei Axialebenen und weist eine Dicke bzw. axiale Länge auf.

Bei einer Weiterbildung wird das permanente Magnetfeld und/oder eine Abweichung in der Symmetrie außerdem für wenigstens einen zweiten Axialabschnitt und/oder in einer zweiten Axialebene erfasst. Auch in diesem Axialabschnitt bzw. dieser Axialebene können im Rahmen der Erfassung des permanenten Magnetfelds bevorzugt Messungen an mehreren Messpunkten vorgenommen werden. Hierdurch können Radialkräfte zwischen Stator und Rotor im Rahmen der Optimierung weiter verringert werden. Je größer die axiale Länge der Permanentmagnetanordnung und/oder des Elektromotors ist, desto stärker wirkt sich die Erfassung und Optimierung des Magnetfelds in mehreren Axialabschnitten positiv aus. Besonders bevorzugt sind Messpunkte über den Umfang der Permanentmagnetanordnung und/oder über ihre axiale Länge verteilt.

Die Optimierung kann grundsätzlich für jeden Axialabschnitt individuell erfolgen, d.h. ohne gemeinsame Berücksichtigung mehrerer Axialabschnitte und insbesondere von Ausgleichseffekten zwischen den Axialabschnitten, die sich aufgrund von Unvollkommenheiten zufällig von selbst ergeben. Bevorzugt ist es allerdings, wenn die Optimierung die wenigstens zwei, insbesondere alle, Axialabschnitte gemeinsam berücksichtigt. So können Ausgleichseffekte berücksichtigt werden und es ist insbesondere nur eine relativ geringe Veränderung des Magnetfelds nötig.

Gemäß einer Ausführungsform ist vorgesehen, dass das Erfassen des permanenten Magnetfeldes des wenigstens einen Permanentmagneten erfolgt, bevor der Permanentmagnet am Rotor bzw. Stator angeordnet wird. Dies ermöglicht einen relativ einfachen Aufbau von Vorrichtungen zur Durchführung des Verfahrens. Es ist zum Beispiel möglich, dass das Magnetfeld an der Oberfläche des Permanentmagneten gemessen und dann gezielt, insbesondere direkt, abgeschwächt wird, um eine gleichmäßigere Verteilung zu erreichen.

Bei einer anderen Ausführungsform ist vorgesehen, dass das Erfassen des permanenten Magnetfeldes des wenigstens einen Permanentmagneten erfolgt, nachdem der Permanentmagnet am Rotor bzw. Stator angeordnet und/oder montiert wird. Insbesondere kann der wenigstens eine Permanentmagnet vor der Messung und vor der Optimierung am Rotor oder Stator montiert werden, um Wechselwirkungen mit dem Material von Rotor bzw. Stator und ggf. mit weiteren Magneten mit erfassen und korrigieren zu können.

Grundsätzlich gilt auch für das Optimieren, insbesondere für ein Verändern des permanenten Magnetfeldes, dass dies vor oder nach der Anordnung und/oder Montage des wenigstens einen Permanentmagneten am Rotor bzw. Stator erfolgen kann.

Das permanente Magnetfeld der Permanentmagnetanordnung kann z.B. erfasst werden, indem die Permanentmagnetanordnung um eine Achse, die der Rotationsachse des Rotors im Betrieb des Elektromotors entspricht, relativ zu einem Magnetfeldsensor rotiert wird, wobei das permanente Magnetfeld an einer Mehrzahl von Messpunkten in Bezug auf die Umfangsrichtung gemessen wird. Dies bildet ein besonders einfaches Verfahren zur gezielten Erfassung des permanenten Magnetfelds. Dabei kann zum Beispiel die Permanentmagnetanordnung um etwa 360° rotiert werden. So kann über im Wesentlichen den gesamten Umfang das Magnetfeld zuverlässig erfasst werden. Z.B. können wenigstens 50 Messpunkte, bevorzugt wenigstens 80 Messpunkte, vorgesehen sein, bevorzugt für jeden von mehreren Axialabschnitten und/oder Axialebenen. Durch diese Art der Erfassung wird letztlich ein Ring von Messpunkten erzeugt, die in einem Axialabschnitt in Bezug auf die Rotationsachse des Rotors liegen. Wenn das Magnetfeld für mehrere Axialabschnitte erfasst und/oder hinsichtlich Symmetrie optimiert wird, können für alle diese Axialabschnitte entsprechende Ringe von Messpunkten erstellt werden. Somit wird das Magnetfeld der Permanentmagnetanordnung letztlich räumlich erfasst und kann entsprechend räumlich optimiert werden. Alternativ zu einem Ring können Messpunkte beispielsweise über eine Schraubenbahn um die Permanentmagnetanordnung verteilt angeordnet sein.

Gemäß einer weiteren Ausführungsform ist vorgesehen, dass das Erfassen des permanenten Magnetfeldes mit Abstand zur Oberfläche des wenigstens einen Permanentmagneten erfolgt. Wenn die Messung des Magnetfeldes nicht direkt auf der Oberfläche des Magneten erfolgt, sondern in einem gewissen Abstand, so werden automatisch auch geometrische Ungenauigkeiten, z.B. durch Dickenschwankungen von Bandagen des Magneten o.Ä., herausgefiltert und die Optimierung wird hierdurch nicht beeinflusst. Der Abstand sollte bevorzugt mindestens so groß sein, dass auch bei einer unrunden Oberfläche bzw. Exzentrizität der Welle oder der Permanentmagnetanordnung immer sichergestellt ist, dass der Magnetfeldsensor nie die Oberfläche berührt. Der Abstand beträgt bevorzugt wenigstens 0,02 mm. Da die gemessene Feldstärke mit dem Abstand zum Magneten abnimmt, ist es vorteilhaft mit relativ geringem Abstand zu messen. Der Abstand kann beispielsweise höchstens 6 mm betragen.

Die Permanentmagnetanordnung kann grundsätzlich zwei oder mehr magnetische Pole aufweisen. Ferner kann die Permanentmagnetanordnung grundsätzlich ein oder mehrere Permanentmagneten aufweisen. Wenn die Permanentmagnetanordnung mehrere Permanentmagneten aufweist, werden diese insbesondere so am Stator oder Rotor angeordnet, dass die Permanentmagnetanordnung zwei oder mehr magnetische Pole aufweist. Dabei sind insbesondere in Bezug auf die Umfangsrichtung gegensätzliche Pole alternierend angeordnet. Ferner ist insbesondere eine gerade Zahl von magnetischen Polen vorgesehen. Insoweit die Permanentmagnetanordnung magnetische Pole aufweist, sind damit insbesondere diejenigen gemeint, mit denen die Elektromagnetanordnung zum Antrieb des Rotors zusammenwirkt.

Bei einem besonders einfachen und vorteilhaften Beispiel umfasst die Permanentmagnetanordnung lediglich einen einzigen zweipoligen Permanentmagneten. Ein solcher kann z.B. als Hohlzylinder ausgebildet sein und insbesondere auf einer Rotorwelle sitzen.

Bevorzugt ist die Elektromagnetanordnung am Stator des Elektromotors und die Permanentmagnetanordnung am Rotor des Elektromotors angeordnet. Grundsätzlich kann dies aber z.B. auch umgekehrt sein, d.h. die Elektromagnetanordnung kann am Rotor des Elektromotors und die Permanentmagnetanordnung am Stator des Elektromotors angeordnet sein.

Der Elektromotor ist bevorzugt Teil eines Vakuumgeräts oder in einem solchen angeordnet.

Als Vakuumgerät sind generell Vorrichtungen anzusehen, die ein Vakuum umfassen, ein Vakuum erzeugen oder zum Einsatz in einem Vakuum ausgebildet sind. Bei einem Vakuumgerät kann es sich beispielsweise um eine Vakuumpumpe, eine Vakuumkammer, ein Mess- und/oder Analysegerät, ein Lecksuchgerät, ein Leitelement, ein Ventil, eine Vakuumdurchführung oder einen Manipulator handeln. Ein Leitelement ist ein Element zur Leitung eines Gasstromes bzw. eines Vakuums. Eine Vakuumdurchführung ermöglicht die Durchführung von Energie und/oder Informationen zwischen einem Vakuumbereich und einem vom Vakuumbereich getrennten Bereich, wie einem Druck- oder Atmosphärenbereich. Ein Manipulator ist eine Vorrichtung zur Übertragung einer Bewegung von einem Druck- oder Atmosphärenbereich in einen Vakuumbereich. Weitere, insbesondere komplexere, Beispiele für Vakuumgeräte umfassen ein Massenspektrometer oder ein Elektronenmikroskop. Ferner kann ein Vakuumgerät auch Kombinationen der vorstehenden Vorrichtungen umfassen.

Der Elektromotor kann dabei zum Beispiel einen Antrieb für pumpaktive Komponenten, wie etwa eine Vakuumpumpe, bilden. Alternativ oder zusätzlich kann ein Elektromotor zum Beispiel in einer Vakuumkammer zum Antrieb einer Prozesseinrichtung vorgesehen sein, also einer Einrichtung zur Durchführung eines bestimmten Prozesses in der Vakuumkammer. In einem besonders bevorzugten Ausführungsbeispiel betrifft die Erfindung die Herstellung einer Vakuumpumpe mit einem Elektromotor nach vorstehend beschriebener Art. Die Vorteile der Erfindung entfalten sich in besonderem Maße, wenn der Rotor des Elektromotors eine hohe Drehzahl aufweist. Dies ist beispielsweise bei Molekularpumpen, insbesondere Turbomolekularpumpen der Fall. Somit richtet sich das Verfahren in besonders bevorzugter Form auf die Herstellung einer Turbomolekularpumpe.

Der Rotor des Elektromotors kann bevorzugt mittels wenigstens eines Magnetlagers gelagert sein. Hierdurch lassen sich Vibrationen, die sich zu empfindlichen Prozesseinrichtungen ausbreiten, weiter reduzieren. Insbesondere kann der Rotor vollständig magnetisch gelagert sein. Alternativ kann eine sogenannte Hybridlagerung vorgesehen sein, bei der ein Magnetlager und ein Wälzlager vorgesehen sind. Weitere im vorliegenden Zusammenhang vorteilhafte Lagerkonzepte sind: 3-Achs-Aktiv und 2-Achs-passiv magnetisch gelagerter Rotor; 5 Achs-Aktiv magnetisch gelagerter Rotor; 2-fach kugelgelagerter Rotor.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: eine Permanentmagnetanordnung und eine Kernanordnung eines beispielhaften Elektromotors im Querschnitt mit Illustration der Flussdichte des Magnetfeldes,
- Fig. 7 bis 9: Illustrationen zu unterschiedlichen Ursachen eines "Unbalanced Magnetic Pull" bzw. von Radialkräften in einem Elektromotor.
- Fig. 10: eine Darstellung einer Vorrichtung zur Durchführung des erfindungsgemäßen Verfahrens in einer Ausführungsform.

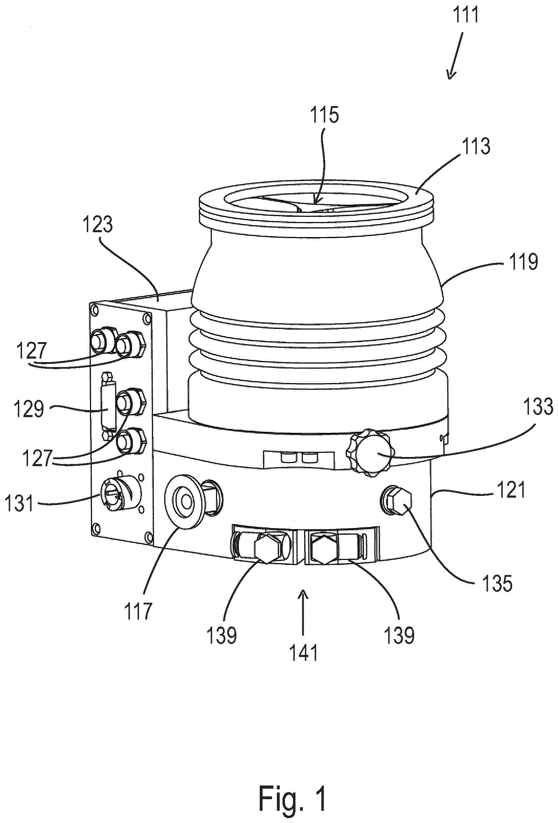

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

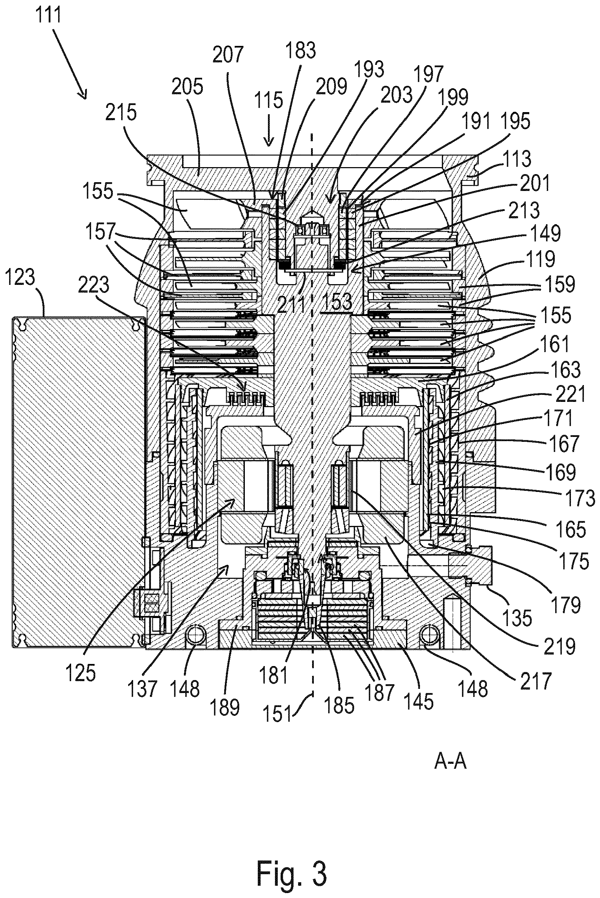

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125 (vgl. auch Fig. 3). Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Es existieren auch Turbomolekularpumpen, die kein derartiges angebrachtes Elektronikgehäuse aufweisen, sondern an eine externe Antriebselektronik angeschlossen werden.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, eingelassen werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann. Andere existierende Turbomolekularvakuumpumpen (nicht dargestellt) werden ausschließlich mit Luftkühlung betrieben.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann. Grundsätzlich sind dabei beliebige Winkel möglich.

Andere existierende Turbomolekularvakuumpumpen (nicht dargestellt), die insbesondere größer sind als die hier dargestellte Pumpe, können nicht stehend betrieben werden.

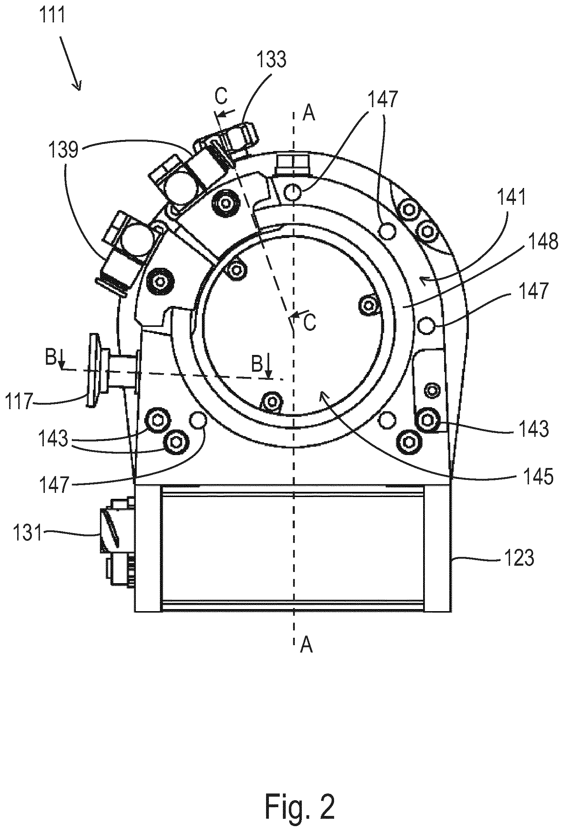

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann. Dies ist bei anderen existierenden Turbomolekularvakuumpumpen (nicht dargestellt), die insbesondere größer sind als die hier dargestellte Pumpe, nicht möglich.

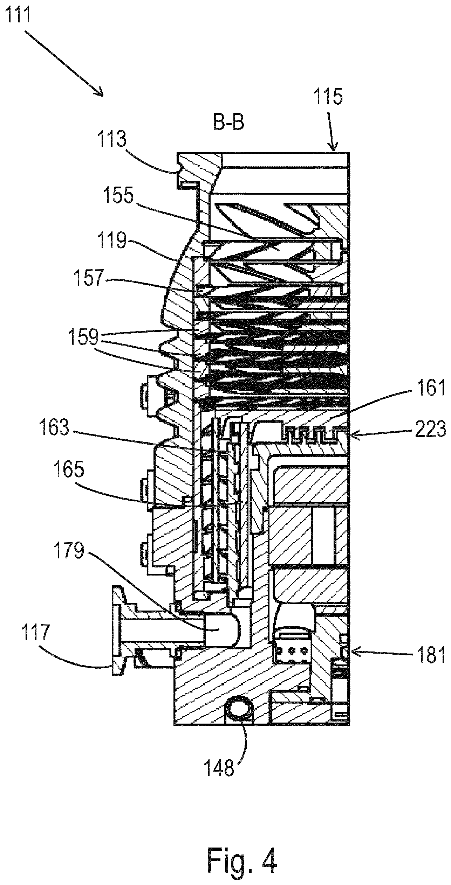

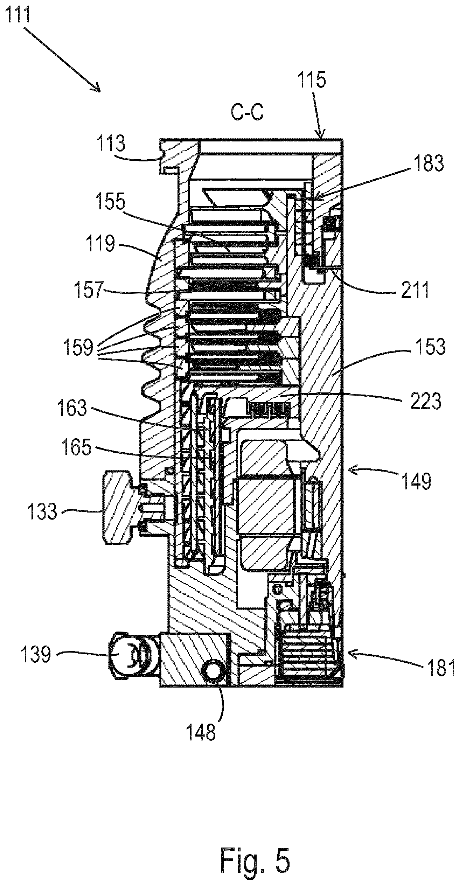

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Es existieren andere Turbomolekularvakuumpumpen (nicht dargestellt), die keine Holweck-Pumpstufen aufweisen.

Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 167, 169 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Bei anderen existierenden Turbomolekularvakuumpumpen (nicht dargestellt) kann anstelle einer Spritzmutter eine Spritzschraube vorgesehen sein. Da somit unterschiedliche Ausführungen möglich sind, wird in diesem Zusammenhang auch der Begriff "Spritzspitze" verwendet.

Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 201 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, damit eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

Der Elektromotor 125 der vorstehend beschriebenen Pumpe 111 lässt sich vorteilhaft durch das erfindungsgemäße Verfahren herstellen und so bezüglich Vibrationsarmut im Betrieb verbessern.

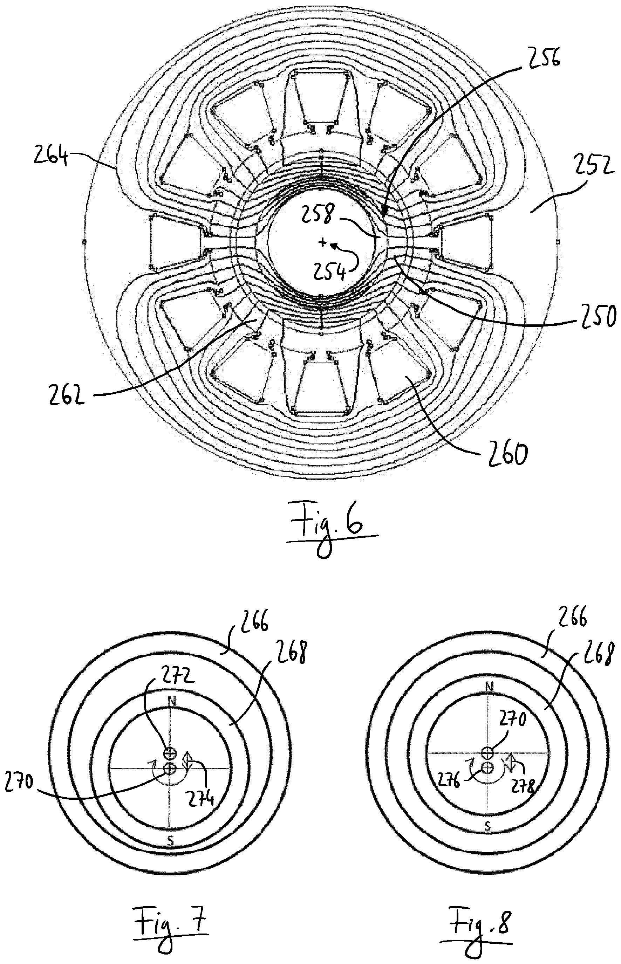

In Fig. 6 sind eine Permanentmagnetanordnung 250 und eine Kernanordnung 252 eines beispielhaften Elektromotors in einem Querschnitt gezeigt, wobei sich die Schnittebene senkrecht zu einer Rotationsachse 254 eines Rotors 256 des Elektromotors erstreckt. Die Rotationsachse 254 erstreckt sich also senkrecht zur Bildebene der Fig. 6.

Der Rotor 256 umfasst neben der Permanentmagnetanordnung 250 eine Rotorwelle 258. Die Permanentmagnetanordnung 250 ist hier beispielhaft durch einen einzigen, ringförmigen Permanentmagneten gebildet, der lediglich zwei in Bezug auf die Rotationsachse 254 gegenüberliegende und gegensätzliche magnetische Pole aufweist.

Die Kernanordnung 252 umfasst mehrere Ausnehmungen 260, die in Bezug auf die Umfangsrichtung gleichmäßig verteilt angeordnet sind und sich in axialer Richtung durch die Kernanordnung 252 hindurch erstrecken. Die Ausnehmungen 260 sind dafür vorgesehen, dass Wicklungen zur Bildung einer Elektromagnetanordnung darin verlegt werden.

Zwischen der Permanentmagnetanordnung 250 und der Kernanordnung 252 befindet sich ein Spalt 262.

In Fig. 6 sind ferner eine Vielzahl an Feldlinien 264 angedeutet, deren Verlauf hier durch Simulation ermittelt wurde. Wenn die Feldlinien 264 im Spalt 262 senkrecht zur Rotationsachse 254 bzw. senkrecht zur Rotoroberfläche verlaufen, ist das Feld im Spalt 262 homogen. Auch wenn dies hier nicht für den gesamten Spalt 262 bzw. den gesamten Umfang des Rotors 256 der Fall ist, so ist das Feld doch für weite Teilbereiche des Spalts 262 bzw. des Umfangs im Wesentlichen homogen. Insbesondere für die Bereiche, in denen das Feld hier im Wesentlichen homogen ist, können im Rahmen des erfindungsgemäßen Verfahrens Inhomogenitäten zum Beispiel durch lokale Veränderung des permanenten Magnetfelds der Permanentmagnetanordnung 250 reduziert werden.

Generell ist das Magnetfeld, welches mit den Feldlinien 264 angedeutet ist, im Wesentlichen symmetrisch in Bezug auf die Rotationsachse 254. Falls das permanente Magnetfeld der Permanentmagnetanordnung 250 eine Abweichung in der Symmetrie aufweist, kann diese beispielsweise im Rahmen des erfindungsgemäßen Verfahrens verringert werden, indem das permanente Magnetfeld lokal verändert wird. Dabei ist anzumerken, dass für den in Fig. 6 gezeigten Fall, dass die Permanentmagnetanordnung 250 innerhalb der Kernanordnung 252 angeordnet ist, das Magnetfeld auch durch die Kernanordnung 252 beeinflusst wird. Das Erfassen und Optimieren des permanenten Magnetfelds der Permanentmagnetanordnung 250 erfolgt allerdings bevorzugt unabhängig von der Kernanordnung 252 und/oder ohne, dass die Permanentmagnetanordnung 250 innerhalb der Kernanordnung 252 angeordnet ist. Dabei wird insbesondere angenommen, dass die Kernanordnung 252 letztlich ausreichend präzise und symmetrisch herstellbar ist. Grundsätzlich kommt aber auch eine zusätzliche Optimierung der Kernanordnung und/oder der Elektromagnetanordnung im Hinblick auf die Symmetrie und/oder Homogenität des sich im Betrieb einstellenden Magnetfelds in Betracht.

In den Fig. 7 und 8 sind jeweils ein Stator 266 und ein Rotor 268 mit einer Permanentmagnetanordnung stark schematisiert dargestellt, wobei der Rotor 268 bzw. die Permanentmagnetanordnung beispielhaft zwei entgegengesetzte und gegenüberliegende magnetische Pole aufweist, nämlich einen mit N bezeichneten Nordpol und eine mit S bezeichneten Südpol.

Hinsichtlich der Ursachen eines "Unbalanced Magnetic Pull" (UMP), also einer unerwünschten Radialkraft im Elektromotor können drei Fälle unterschieden werden, die durch die Fig. 7, 8 und 9 illustriert werden und nachfolgend dargelegt werden. Es versteht sich, dass diese Fälle nachfolgend isoliert betrachtet werden, dass in der Praxis aber typischerweise alle Fälle mehr oder weniger ausgeprägt gleichzeitig vorliegen.

Erstens kann - wie es in Fig. 7 angedeutet ist - die Rotationsachse 270 des Rotors 268 gegenüber einer Symmetrieachse 272 des Stators verschoben sein. Hierdurch ergibt sich eine statische Exzentrizität 274. Der kleinste Spalt zwischen Rotor 268 und Stator 266 ist hier immer in die gleiche radiale Richtung orientiert, in Fig. 7 nach unten. Die statische Exzentrizität ist also ein Resultat von Unvollkommenheiten in der Lage des Rotors 268 relativ zum Stator 266.

Zweitens kann - wie es in Fig. 8 angedeutet ist - das permanente Magnetfeld der Permanentmagnetanordnung bzw. des Rotors 268 mit einer Symmetrieachse 276 des Magnetfelds von der Rotationsachse 270 des Rotors 268 abweichen. Es ergibt sich eine dynamische Exzentrizität, bei der der Ort des kleinsten Spalts und/oder die Radialkraft zwischen Rotor 268 und Stator 266 mit der Rotordrehzahl umläuft. Die dynamische Exzentrizität kann etwa durch einen außermittigen Sitz der Permanentmagnetanordnung auf einer Welle des Rotors 268 oder aber auch durch Rotorschwingungen verursacht werden.

Drittens kann das permanente Magnetfeld der Permanentmagnetanordnung eine Abweichung von einer Sollform und insbesondere eine Abweichung in seiner Symmetrie in Bezug auf die Rotationsachse des Rotors, und insbesondere der Permanentmagnetanordnung, aufweisen. Dies kann beispielsweise aufgrund von Fehlern im Magnetmaterial oder Fehlern bei der Magnetisierung des Magnetmaterials der Fall sein. Die Abweichung von der Sollform bzw. der Symmetrie führt zu einer inhomogenen Flussdichte bzw. Feldstärke im Spalt zwischen Rotor und Stator. Die resultierende Kraft läuft mit der Rotordrehung um und ähnelt daher einer Unwucht, weist jedoch eine konstante anstelle einer drehzahlabhängigen Amplitude auf.

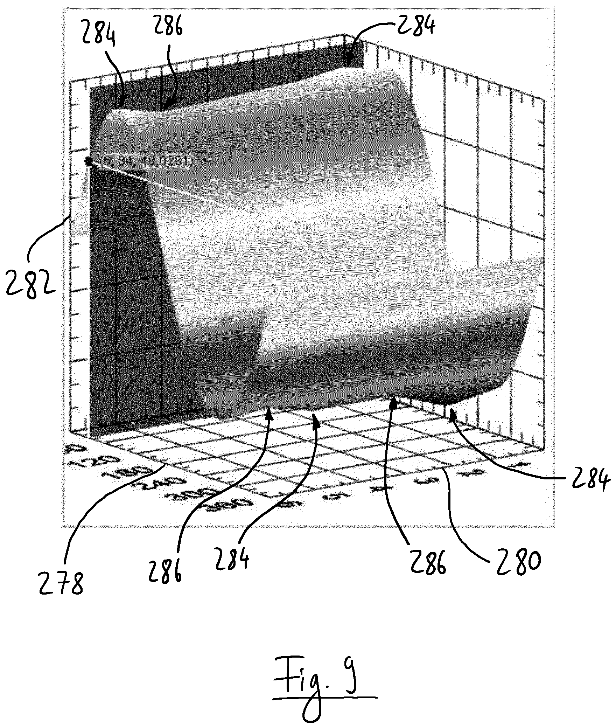

Der dritte Fall ist in Fig. 9 veranschaulicht. Diese zeigt eine Auftragung der magnetischen Feldstärke oder einer mit der Feldstärke zusammenhängenden Größe über den Umfang einer beispielhaften Permanentmagnetanordnung. Die Feldstärke ist dabei an einer Vielzahl von Messpunkten erfasst, die sowohl über die axiale Länge der Permanentmagnetanordnung als auch über deren Umfang zumindest im Wesentlichen gleichmäßig verteilt sind. Dabei ist insbesondere der radiale Abstand des verwendeten Sensors zur Oberfläche der Permanentmagnetanordnung für alle Messpunkte gleich. Zwischen den einzelnen Messungen wurde die Permanentmagnetanordnung um ihre Rotationsachse relativ zum Sensor gedreht und dies wurde für mehrere Axialabschnitte durchgeführt.

Eine erste Achse 278 zeigt die Winkelposition des Messpunkts in Grad an und erstreckt sich über 360°. Eine zweite Achse 280 zeigt eine axiale Position des Messpunkts in Zentimetern an. Eine dritte Achse 282 zeigt die Feldstärke des permanenten Magnetfelds am betreffenden Messpunkt an.

Unter Interpolation zwischen den Messpunkten und/oder Verbindung der Messpunkte ergibt sich die in Fig. 9 sichtbare Fläche, die in Bezug auf die von den Achsen 278 und 282 aufgespannte Ebene einen im Wesentlichen wellenförmigen Verlauf aufweist. Die Wellenform ist - abgesehen von erfassten Abweichungen, auf die nachfolgend eingegangen wird - insbesondere die Sollform des Feldstärkeverlaufs. Außerdem ist die Sollform für alle Axialabschnitte gleich.

Wie sich aus Fig. 9 ergibt, ist der Verlauf der Feldstärke allerdings nicht perfekt wellenförmig. Vielmehr sind gewisse Abweichungen von der gewünschten Wellenform in Fig. 9 erkennbar, nämlich am besten in den Bereichen der betragsmäßig höchsten Feldstärke, d. h in den in Bezug auf die Achse 282 oberen und unteren Bereichen. Zwar ist die gewünschte Wellenform nicht aufgetragen, jedoch zeigen allein die Abweichungen in den Maxima zwischen verschiedenen Axialebenen, d. h. an verschiedenen Punkten in Bezug auf die Achse 280, dass das Magnetfeld nicht stets ideal verläuft. So sind insbesondere mehrere Maxima 284 und Minima 286 sichtbar, was im Rahmen der Sollform nicht der Fall sein sollte.

Eine unerwünschte Radialkraft ergibt sich im dritten Fall insbesondere dann, wenn in Bezug auf eine bestimmte Axialebene das Magnetfeld eine Abweichung von seiner Symmetrie aufweist, also etwa an den Polen betragsmäßig unterschiedliche Werte von Flussdichte und/oder Feldstärke auftreten. Insbesondere hängt die Radialkraft von der Differenz der Flussdichte bzw. Feldstärke zwischen den Polen ab. Zwischen verschiedenen Axialebenen können aber grundsätzlich auch Ausgleichseffekte auftreten. So kann zum Beispiel in einer ersten Axialebene eine erste Flussdichte- bzw. Feldstärkedifferenz zwischen den Polen vorliegen und in einer zweiten Axialebene kann eine zweite Flussdichte- bzw. Feldstärkedifferenz vorliegen. Wenn die Flussdichte- bzw. Feldstärkedifferenzen entgegengesetzt sind, gleichen sie sich hinsichtlich der Radialkraft aus. Dies gilt jedenfalls bei ausschließlicher Betrachtung der Radialkräfte ohne Berücksichtigung einer Biegung des Rotors. Wenn die Flussdichte- bzw. Feldstärkedifferenzen nicht nur entgegengesetzt, sondern auch betragsmäßig ähnlich sind, werden Radialkräfte im Wesentlichen vollständig ausgeglichen. Allerdings können natürlich die magnetischen Verhältnisse in anderen Axialebenen weitere negative oder auch positive Einflüsse haben. Hieraus ergibt sich, dass es vorteilhaft ist, wenn die Permanentmagnetanordnung in verschiedenen Axialabschnitten und/oder Axialebenen hinsichtlich ihres Magnetfelds vermessen wird. Dann können Ausgleichseffekte zwischen den Axialebenen bzw. Axialabschnitten berücksichtigt werden und insbesondere kann der Aufwand zur Veränderung des Magnetfelds reduziert werden. Konkret kann eine Netto-Abweichung in der Symmetrie über mehrere Axialabschnitte und/oder eine hiermit verbundene und zu erwartende Netto-Radialkraft ermittelt werden, wobei anschließend das Magnetfeld lediglich soweit verändert wird, dass die Netto-Abweichung bzw. die Netto-Radialkraft möglichst weitgehend reduziert wird.

Die Erfindung setzt insbesondere beim dritten hier beschriebenen Fall an. D. h. es sollen Abweichungen des permanenten Magnetfelds des wenigstens einen Permanentmagneten und der Permanentmagnetanordnung von einer Ideal- und/oder Sollform des Magnetfeldes reduziert werden, und dies insbesondere unabhängig von etwaigen geometrischen Abweichungen. Insbesondere wurden zwei verschiedene Ansätze beschrieben, die aber grundsätzlich miteinander kombinierbar sind, nämlich einerseits die Veränderung des permanenten Magnetfelds in Bezug auf wenigstens einen bestimmten Permanentmagneten und andererseits die Auswahl und/oder Anordnung von wenigstens zwei Permanentmagneten derart, dass sich bei diesen Permanentmagneten vorhandene Abweichungen im Magnetfeld gegenseitig in Bezug auf die Rotationsachse ausgleichen, wenn die Permanentmagneten im Rahmen der Permanentmagnetanordnung angeordnet sind.

Die Erfindung entfaltet ihre Vorteile, also die Reduzierung der Radialkraft und Verbesserung der Vibrationsarmut, aber insbesondere auch beim zweiten oben beschriebenen Fall, und insbesondere wenn die Permanentmagnetanordnung mit ihrer Symmetrieachse aufgrund von gewissen geometrischen Abweichungen von der Rotationsachse des Rotors abweicht. Denn dann ist auch eine Abweichung in der Symmetrie des Magnetfeldes in Bezug auf die Rotationsachse des Rotors zu erwarten. Nach Montage des wenigstens einen Permanentmagneten kann das Magnetfeld der Permanentmagnetanordnung, die am Rotor montiert ist, erfasst werden, zum Beispiel ähnlich wie es bezüglich Fig. 9 im Zusammenhang mit dem dritten Fall beschrieben ist. Anschließend kann beispielsweise auch dieses Magnetfeld verändert werden, um Abweichungen in der Symmetrie in Bezug auf die Rotationsachse des Rotors zu reduzieren. Tatsächlich wird hierbei der dritte Fall gewissermaßen automatisch miterfasst und umgekehrt.

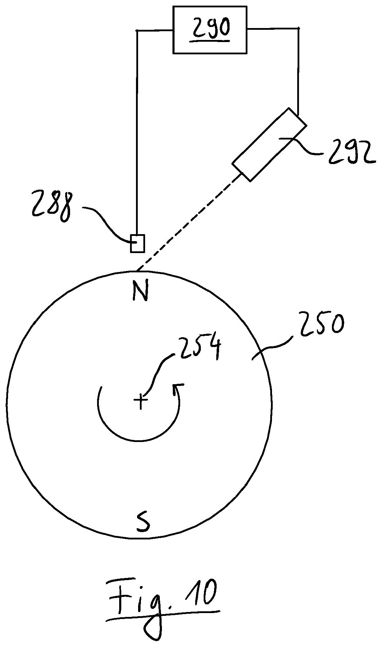

In Fig. 10 ist eine schematische Darstellung eines Verfahrens gezeigt, bei dem das Magnetfeld verändert wird. Eine Permanentmagnetanordnung 250 wird um eine Rotationsachse 254 rotiert, die ihrer Symmetrieachse sowie im Betrieb des Elektromotors der Rotationsachse des Rotors entsprechen soll. Dabei wird das Magnetfeld der Permanentmagnetanordnung 250 mittels eines Sensors 288 an einer Vielzahl von Messpunkten erfasst, die über den Umfang der Permanentmagnetanordnung 250 verteilt angeordnet sind. Der Sensor 288 ist mit einer Steuerungseinrichtung 290 zur Durchführung des Verfahrens verbunden. Die Steuerungseinrichtung 290 steuert außerdem die Rotation der Permanentmagnetanordnung 250. Mit der Steuerungseinrichtung ist außerdem ein Laser 292 verbunden, der auf die Oberfläche der Permanentmagnetanordnung 250 gerichtet ist, wie es gestrichelt angedeutet ist. Nachdem mittels des Sensors 288 Abweichungen des Magnetfelds von der Sollform und/oder in der Symmetrie in Bezug auf die Rotationsachse 254 festgestellt wurden, kann mittels des Lasers 292 das Magnetfeld lokal in Bezug auf die Umfangsrichtung abgeschwächt werden, sodass Abweichungen verringert werden können.

Zusammenfassend sind also zahlreiche Ansätze und Ausführungsformen zur Optimierung des permanenten Magnetfelds einer Permanentmagnetanordnung eines Elektromotors, insbesondere eines solchen einer Vakuumpumpe, insbesondere Turbomolekularpumpe, beschrieben worden. Diese ermöglichen auf einfache Weise die Reduzierung von mechanischen und/oder magnetischen Schwingungen bzw. Vibrationen im Betrieb des Elektromotors bzw. der Pumpe. Dies erweist sich insbesondere im Zusammenhang mit vibrationsempfindlichen Anwendungen als vorteilhaft, beispielsweise wenn der Elektromotor mechanisch mit einem Elektronenmikroskop verbunden ist, zum Beispiel weil der Elektromotor eine Vakuumpumpe für das Elektronenmikroskop antreibt.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung
- 250: Permanentmagnetanordnung
- 252: Kernanordnung
- 254: Rotationsachse
- 256: Rotor
- 258: Rotorwelle
- 260: Ausnehmung
- 262: Spalt
- 264: Feldlinien
- 266: Stator
- 268: Rotor
- 270: Rotationsachse
- 272: Symmetrieachse des Stators
- 274: statische Exzentrizität
- 276: Symmetrieachse des Magnetfelds
- 278: erste Achse: Winkelposition
- 280: zweite Achse: axiale Position
- 282: dritte Achse: Feldstärke
- 284: Maximum
- 286: Minimum
- 288: Sensor
- 290: Steuerungseinrichtung
- 292: Laser

## Patentansprüche

1. Verfahren zur Herstellung eines Elektromotors (125) oder eines Vakuumgeräts, insbesondere einer Turbomolekularpumpe (111), mit einem Elektromotor (125),
wobei der Elektromotor (125) eine Elektromagnetanordnung und eine Permanentmagnetanordnung umfasst, wobei die Elektromagnetanordnung an einem Stator (217, 266) des Elektromotors (125) und die Permanentmagnetanordnung (250) an einem Rotor (149, 256, 268) des Elektromotors (125) angeordnet ist, und/oder umgekehrt;
wobei die Permanentmagnetanordnung (250) ein permanentes Magnetfeld aufweist, welches sich insbesondere im Wesentlichen symmetrisch in Bezug auf eine Rotationsachse (151, 270) des Rotors (149, 256, 268) erstreckt;
**dadurch gekennzeichnet, daß**
das Verfahren die Schritte umfasst:
Bereitstellen wenigstens eines Permanentmagneten für die Permanentmagnetanordnung (250);
Erfassen des permanenten Magnetfeldes des wenigstens einen Permanentmagneten;
anschließend Optimieren des permanenten Magnetfelds der Permanentmagnetanordnung (250) derart, dass eine Abweichung in der Symmetrie und/oder eine magnetische Radialkraft zwischen Rotor (149, 256, 268) und Stator (217, 266) möglichst gering ist.

2. Verfahren nach Anspruch 1,
wobei eine lokale Abweichung von einer Sollform des permanenten Magnetfeldes des wenigstens einen Permanentmagneten und/oder der Permanentmagnetanordnung (250) verringert und/oder ausgeglichen wird.

3. Verfahren nach Anspruch 1 oder 2,
wobei das permanente Magnetfeld der Permanentmagnetanordnung (250) derart optimiert wird, dass eine Inhomogenität des Magnetfelds im Spalt (262, 219) zwischen Rotor (149, 256, 268) und Stator (217, 266) im Betrieb des Elektromotors (125) reduziert wird.

4. Verfahren nach wenigstens einem der vorstehenden Ansprüche,
wobei die Permanentmagnetanordnung (250) wenigstens zwei in Bezug auf die Rotationsachse (151, 270) des Rotors (149, 256, 268) zumindest im Wesentlichen gegenüberliegende magnetische Pole aufweist, und
wobei das permanente Magnetfeld dahingehend optimiert wird, dass die Pole in ihrer Flussdichte und/oder Feldstärke möglichst ähnlich sind.

5. Verfahren nach wenigstens einem der vorstehenden Ansprüche, wobei das Optimieren umfasst, dass das permanente Magnetfeld verändert wird.

6. Verfahren nach Anspruch 5,
wobei das permanente Magnetfeld durch lokales Abschwächen und/oder Verstärken des permanenten Magnetfeldes des wenigstens einen Permanentmagneten optimiert wird.

7. Verfahren nach 5 oder 6,
wobei das permanente Magnetfeld des wenigstens einen Permanentmagneten durch mechanische Bearbeitung des wenigstens einen Permanentmagneten verändert wird, und/oder
wobei das permanente Magnetfeld des wenigstens einen Permanentmagneten durch thermische Beeinflussung verändert wird.

8. Verfahren nach wenigstens einem der Ansprüche 5 bis 7,
wobei das permanente Magnetfeld durch einen Laser (292) verändert wird.

9. Verfahren nach wenigstens einem der vorstehenden Ansprüche,
wobei die Permanentmagnetanordnung (250) wenigstens zwei Permanentmagneten aufweist und wobei das Optimieren umfasst, dass die Permanentmagneten aus einer Mehrzahl an Permanentmagneten unter Berücksichtigung von Abweichungen ihres permanenten Magnetfeldes von einer Sollform ausgewählt und/oder angeordnet werden.

10. Verfahren nach Anspruch 9,
wobei ein erster Permanentmagnet ausgewählt wird, für den eine Abweichung seines permanenten Magnetfeldes von einer Sollform erfasst wurde, und wobei wenigstens ein zweiter Permanentmagnet ausgewählt wird, für den ebenfalls eine Abweichung seines permanenten Magnetfelds von einer Sollform erfasst wurde, wobei der erste Permanentmagnet und wenigstens der zweite Permanentmagnet derart ausgewählt und/oder angeordnet werden, dass sich die Abweichungen in Bezug auf die Rotationsachse (151, 270) des Rotors (149, 256, 268) möglichst weitgehend ausgleichen.

11. Verfahren nach wenigstens einem der vorstehenden Ansprüche,
wobei das permanente Magnetfeld der Permanentmagnetanordnung (250) in einem ersten und in wenigstens einem zweiten Axialabschnitt erfasst wird,
insbesondere wobei beim Optimieren beide Axialabschnitte gemeinsam berücksichtigt werden.

12. Verfahren nach wenigstens einem der vorstehenden Ansprüche,
wobei das Erfassen des permanenten Magnetfeldes des wenigstens einen Permanentmagneten erfolgt, bevor oder nachdem der Permanentmagnet am Rotor (149, 256, 268) bzw. Stator (217, 266) angeordnet wird.

13. Verfahren nach wenigstens einem der vorstehenden Ansprüche,
wobei das permanente Magnetfeld der Permanentmagnetanordnung (250) erfasst wird, indem die Permanentmagnetanordnung (250) um eine Achse, die der Rotationsachse (151, 270) des Rotors (149, 256, 268) im Betrieb des Elektromotors (125) entspricht, rotiert wird, wobei das permanente Magnetfeld an einer Mehrzahl von Messpunkten in Bezug auf die Umfangsrichtung gemessen wird.

14. Verfahren nach wenigstens einem der vorstehenden Ansprüche,
wobei das Erfassen des permanenten Magnetfeldes mit Abstand zur Oberfläche des wenigstens einen Permanentmagneten erfolgt.

15. Vakuumgerät (111), insbesondere Vakuumpumpe, mit einem Elektromotor (125), hergestellt durch ein Verfahren nach einem der vorstehenden Ansprüche.

## Claims

1. A method of manufacturing an electric motor (125) or a vacuum device, in particular a turbomolecular pump (111), comprising an electric motor (125), wherein the electric motor (125) comprises an electromagnet arrangement and a permanent magnet arrangement, wherein the electromagnet arrangement is arranged at a stator (217, 266) of the electric motor (125) and the permanent magnet arrangement (250) is arranged at a rotor (149, 256, 268) of the electric motor (125), and/or vice versa;
wherein the permanent magnet arrangement (250) has a permanent magnetic field which in particular extends substantially symmetrically with respect to an axis of rotation (151, 270) of the rotor (149, 256, 268), **characterized in that**
the method comprises the steps:
providing at least one permanent magnet for the permanent magnet arrangement (250);
detecting the permanent magnetic field of the at least one permanent magnet; and
subsequently optimizing the permanent magnetic field of the permanent magnet arrangement (250) such that a deviation in the symmetry and/or a magnetic radial force between the rotor (149, 256, 268) and the stator (217, 266) is/are as small as possible.

2. A method in accordance with claim 1,
wherein a local deviation from a desired shape of the permanent magnetic field of the at least one permanent magnet and/or of the permanent magnet arrangement (250) is reduced and/or compensated.

3. A method in accordance with claim 1 or claim 2,
wherein the permanent magnetic field of the permanent magnet arrangement (250) is optimized such that an inhomogeneity of the magnetic field in the gap (262, 219) between the rotor (149, 256, 268) and the stator (217, 266) is reduced in the operation of the electric motor (125).

4. A method in accordance with at least one of the preceding claims,
wherein the permanent magnet arrangement (250) has at least two magnetic poles at least substantially disposed opposite one another with respect to the axis of rotation (151, 270) of the rotor (149, 256, 268), and wherein the permanent magnetic field is optimized such that the poles are as similar as possible in their flux density and/or field strength.

5. A method in accordance with at least one of the preceding claims,
wherein the optimization comprises the permanent magnetic field being changed.

6. A method in accordance with claim 5,
wherein the permanent magnetic field is optimized by locally attenuating and/or amplifying the permanent magnetic field of the at least one permanent magnet.

7. A method in accordance with claim 5 or claim 6,
wherein the permanent magnetic field of the at least one permanent magnet is changed by a mechanical processing of the at least one permanent magnet, and/or
wherein the permanent magnetic field of the at least one permanent magnet is changed by a thermal influence.

8. A method in accordance with at least one of the claims 5 to 7,
wherein the permanent magnetic field is changed by a laser (292).

9. A method in accordance with at least one of the preceding claims,
wherein the permanent magnet arrangement (250) has at least two permanent magnets, and wherein the optimization comprises the permanent magnets being selected and/or arranged from a plurality of permanent magnets taking into account deviations of their permanent magnetic field from a desired shape.

10. A method in accordance with claim 9,
wherein a first permanent magnet is selected for which a deviation of its permanent magnetic field from a desired shape has been detected, and wherein at least a second permanent magnet is selected for which a deviation of its permanent magnetic field from a desired shape has likewise been detected, wherein the first permanent magnet and at least the second permanent magnet are selected and/or arranged such that the deviations compensate one another as far as possible with respect to the axis of rotation (151, 270) of the rotor (149, 256, 268).

11. A method in accordance with at least one of the preceding claims,
wherein the permanent magnetic field of the permanent magnet arrangement (250) is detected in a first axial section and in at least a second axial section,
in particular wherein both axial sections are jointly taken into account during the optimization.

12. A method in accordance with at least one of the preceding claims,
wherein the detection of the permanent magnetic field of the at least one permanent magnet takes place before or after the permanent magnet is arranged at the rotor (149, 256, 268) or the stator (217, 266).

13. A method in accordance with at least one of the preceding claims,
wherein the permanent magnetic field of the permanent magnet arrangement (250) is detected by the permanent magnet arrangement (250) being rotated about an axis which corresponds to the axis of rotation (151, 270) of the rotor (149, 256, 268) in the operation of the electric motor (125), wherein the permanent magnetic field is measured at a plurality of measurement points with respect to the peripheral direction.

14. A method in accordance with at least one of the preceding claims, wherein the detection of the permanent magnetic field takes place at a spacing from the surface of the at least one permanent magnet.

15. A vacuum device (111), in particular a vacuum pump, comprising an electric motor (125), manufactured by a method in accordance with any of the preceding claims.

## Revendications

1. Procédé de fabrication d'un moteur électrique (125) ou d'un appareil à vide, en particulier d'une pompe turbomoléculaire (111), comprenant un moteur électrique (125),
le moteur électrique (125) comprenant un ensemble d'électroaimant et un ensemble d'aimant(s) permanent(s), l'ensemble d'électroaimant étant agencé sur un stator (217, 266) du moteur électrique (125) et l'ensemble d'aimant(s) permanent(s) (250) étant agencé sur un rotor (149, 256, 268) du moteur électrique (125), et/ou inversement ;
l'ensemble d'aimant(s) permanent(s) (250) présentant un champ magnétique permanent qui s'étend en particulier de manière sensiblement symétrique par rapport à un axe de rotation (151, 270) du rotor (149, 256, 268) ; **caractérisé en ce que**
le procédé comprend les étapes consistant à :
fournir au moins un aimant permanent pour l'ensemble d'aimant(s) permanent(s) (250) ;
détecter le champ magnétique permanent dudit au moins un aimant permanent ;
puis optimiser le champ magnétique permanent de l'ensemble d'aimant(s) permanent(s) (250) de telle sorte qu'une déviation dans la symétrie et/ou une force radiale magnétique entre le rotor (149, 256, 268) et le stator (217, 266) soit la plus faible possible.

2. Procédé selon la revendication 1,
dans lequel une déviation locale par rapport à une forme de consigne du champ magnétique permanent dudit au moins un aimant permanent et/ou de l'ensemble d'aimant(s) permanent(s) (250) est réduite et/ou compensée.

3. Procédé selon la revendication 1 ou 2,
dans lequel le champ magnétique permanent de l'ensemble d'aimant(s) permanent(s) (250) est optimisé de manière à réduire une inhomogénéité du champ magnétique dans l'entrefer (262, 219) entre le rotor (149, 256, 268) et le stator (217, 266) pendant le fonctionnement du moteur électrique (125).

4. Procédé selon l'une au moins des revendications précédentes,
dans lequel l'ensemble d'aimant(s) permanent(s) (250) comprend au moins deux pôles magnétiques au moins sensiblement opposés l'un à l'autre par rapport à l'axe de rotation (151, 270) du rotor (149, 256, 268), et
le champ magnétique permanent est optimisé de telle sorte que les pôles soient aussi similaires que possible quant à leur densité de flux et/ou à leur intensité de champ.

5. Procédé selon l'une au moins des revendications précédentes,
dans lequel l'optimisation comprend le fait de modifier le champ magnétique permanent.

6. Procédé selon la revendication 5,
dans lequel le champ magnétique permanent est optimisé en atténuant et/ou en amplifiant localement le champ magnétique permanent dudit au moins un aimant permanent.

7. Procédé selon la revendication 5 ou 6,
dans lequel le champ magnétique permanent dudit au moins un aimant permanent est modifié par usinage mécanique dudit au moins un aimant permanent, et/ou
le champ magnétique permanent dudit au moins un aimant permanent est modifié par influence thermique.

8. Procédé selon l'une au moins des revendications 5 à 7,
dans lequel le champ magnétique permanent est modifié par un laser (292).

9. Procédé selon l'une au moins des revendications précédentes,
dans lequel l'ensemble d'aimant(s) permanent(s) (250) comprend au moins deux aimants permanents, et l'optimisation comprend le fait d'agencer et/ou de sélectionner les aimants permanents parmi une pluralité d'aimants permanents en tenant compte des déviations de leur champ magnétique permanent par rapport à une forme de consigne.

10. Procédé selon la revendication 9,
dans lequel un premier aimant permanent est sélectionné, pour lequel une déviation de son champ magnétique permanent par rapport à une forme de consigne a été détectée, et
au moins un deuxième aimant permanent est sélectionné, pour lequel une déviation de son champ magnétique permanent par rapport à une forme de consigne a également été détectée, le premier aimant permanent et au moins le deuxième aimant permanent étant sélectionnés et/ou agencés de telle sorte que les déviations par rapport à l'axe de rotation (151, 270) du rotor (149, 256, 268) se compensent le plus largement possible.

11. Procédé selon l'une au moins des revendications précédentes,
dans lequel le champ magnétique permanent de l'ensemble d'aimant(s) permanent(s) (250) est détecté dans une première portion axiale et dans au moins une deuxième portion axiale,
en particulier, les deux portions axiales étant prises en compte conjointement lors de l'optimisation.

12. Procédé selon l'une au moins des revendications précédentes,
dans lequel la détection du champ magnétique permanent dudit au moins un aimant permanent s'effectue avant ou après que l'aimant permanent soit agencé sur le rotor (149, 256, 268) ou sur le stator (217, 266).

13. Procédé selon l'une au moins des revendications précédentes,
dans lequel le champ magnétique permanent de l'ensemble d'aimant(s) permanent(s) (250) est détecté en faisant tourner l'ensemble d'aimant(s) permanent(s) (250) autour d'un axe qui, lors du fonctionnement du moteur électrique (125), correspondant à l'axe de rotation (151, 270) du rotor (149, 256, 268), le champ magnétique permanent étant mesuré en une pluralité de points de mesure par rapport à la direction circonférentielle.

14. Procédé selon l'une au moins des revendications précédentes,
dans lequel la détection du champ magnétique permanent s'effectue à distance de la surface dudit au moins un aimant permanent.

15. Appareil à vide (111), en particulier pompe à vide, comprenant un moteur électrique (125) fabriqué par un procédé selon l'une des revendications précédentes.
